# EUROPEAN PATENT APPLICATION

(11) **EP 3 251 837 A1**
(43) Date of publication of application: **06.12.2017**
(21) Application number: 16171990.1
(22) Date of filing: 30.05.2016
(51) Int. Cl.: B32B 17/10

(54) **METHOD FOR PRODUCING HUD COMPATIBLE WINDSHIELDS AND A WINDSHIELD OBTAINED BY THE METHOD**

(71) Applicant: AGC Glass Europe, 1348 Louvain-la-Neuve (BE)
(72) Inventor: Schröder, Brigitte, 1348 Louvain-La-Neuve (BE); Dado, Carmelo, 7110 Houdeng-Goegnies (BE); Ayoub, Patrick, 1348 Louvain-La-Neuve (BE)
(74) Representative: Chabou, Samia

(57) **Abstract**

The present invention concerns a method for producing a HUD compatible windshield 2 comprising a HUD viewing field 22 provided by an area of a portion of a wedge shaped PVB sheet 21 with an appropriate wedge angle 1 for compensating the double images occurring in reflection at outside and inside surfaces 9,8 of the windshield 2, wherein the method comprises the following steps:
- providing said wedge shaped PVB sheet portion 21;
- providing a portion of a plane PVB sheet 23;
- assembling said two respective portions 21,23 of the wedge shaped and plane PVB sheets together; and
- forming the windshield 2,

According to the present invention, the portion of the plane PVB sheet 23 is assembled to the portion of the wedge shaped PVB sheet 21 above the latter, in order to be in the upper part 33 of the windshield 2.

## Description

### Field of the invention

The invention relates to a method for producing HUD (head up display) compatible windshields.

The invention also relates to a windshield obtained by said method.

### Description of prior art

A heady-up display, also known as HUD, is a transparent display that presents data without requiring users, generally drivers, to look away from their usual viewpoints. Although they were initially developed for military aviation, HUDs are now used in commercial aircraft, land vehicles and other, mostly professional applications. A typical HUD contains three primary components: a projector unit, a combiner, and a video generation computer. The combiner is generally an angled flat piece of glass located directly in front of the viewer, for example the windshield of a vehicle, that redirects the projected image from the projector in such a way as to see the field of view and the projected image at the same time.

In vehicles with a HUD, the double images occurring in reflection at outside and inside surfaces of the windshield are usually compensated by including an appropriate wedge angle sheet between these outside and inside surfaces. Due to such wedge angle, the reflected images from the inside and outside surfaces of the windshield substantially overlap at the viewer's eyes. The appropriate value of the wedge angle depends on the geometric features and position of the HUD viewing field in the windshield, the position of the projector and the viewpoint of the driver. In general, a constant wedge angle value considered as the best compromise for the different driver's heights is chosen and included in the windshield. Variable wedge angle is also sometimes used to better fit with the different driver heights.

Windshields with such a wedge angle sheet are usually made by sandwiching a wedge-shaped PVB (polyvinyl butyral) sheet between two glass sheets. Such windshields are for example disclosed in document US5013134.

The problem is that the wedge-shaped PBV sheet is an expensive product, which impacts significantly the cost of manufacturing the windshields.

Document EP 2883693 teaches a method for producing a HUD compatible windshield comprising a HUD viewing field provided by an area of a portion of a wedge shaped PVB sheet with an appropriate wedge angle for compensating the double images occurring in reflection at outside and inside surfaces of the windshield, wherein the method comprises the following steps:
- providing said wedge shaped PVB sheet portion;
- providing a portion of a plane PVB sheet;
- assembling said two respective portions of the wedge shaped and plane PVB sheets together; and forming the windshield.

However, according to this method of the prior art, the wedge PVB sheet portion is either surrounded by the plane PVB sheet portion, by assembling them on top of each other or by substituting part of the plane PVB sheet portion by the wedge PVB sheet portion, or comprised between two plane PVB sheet portions.
Such a manufacturing process is still too costly, though a plane PVB sheet is much cheaper than a wedged PVB sheet.

### Summary of the invention

The first object of the invention is to provide a method for producing a HUD compatible windshield at still a lower cost.

To this end, the invention relates first to a method for producing a HUD compatible windshield comprising a HUD viewing field provided by an area of a portion of a wedge shaped PVB sheet with an appropriate wedge angle for compensating the double images occurring in reflection at outside and inside surfaces of the windshield, wherein the method comprises the following steps:
- providing said wedge shaped PVB sheet portion;
- providing a portion of a plane PVB sheet;
- assembling said two respective portions of the wedge shaped and plane PVB sheets together; and
- forming the windshield,
characterized in that
- the portion of the plane PVB sheet is assembled to the portion of the wedge shaped PVB sheet above the latter, in order to be in the upper part of the windshield.

Thanks to the invention, the wedge sheet of the windshield comprises two portions exclusively, without the previous need, during the manufacturing process of either cutting part of the plane PVB sheet portion or having two PVB sheet portions on top of each other. The manufacturing cost is therefore advantageously reduced. The manufacturing process of the invention is very simple.

In the preferred implementation of the method of the invention, the assembly of the two wedge and plane PVB sheet portions is laminated between two glass sheets.

In an advantageous implementation of the method of the invention, adjacent edges of the two plane and wedge PVB sheet portions have the same thickness.

Such feature will allow having an optimal junction between the plane and wedge shaped PVB sheet portions.

The application also concerns a windshield obtained by the method of the invention.

### Short description of the drawings

The invention will be better understood upon reading the following description with reference to the accompanying drawings in which:
Fig.1 shows a HUD from the prior art with a wedge shaped windshield;
Fig.2 shows an assembly of PVB sheet portions of the windshield of the invention; and
Fig.3 shows the thickness profile of the assembly of Fig. 2.

### Detailed description of the invention

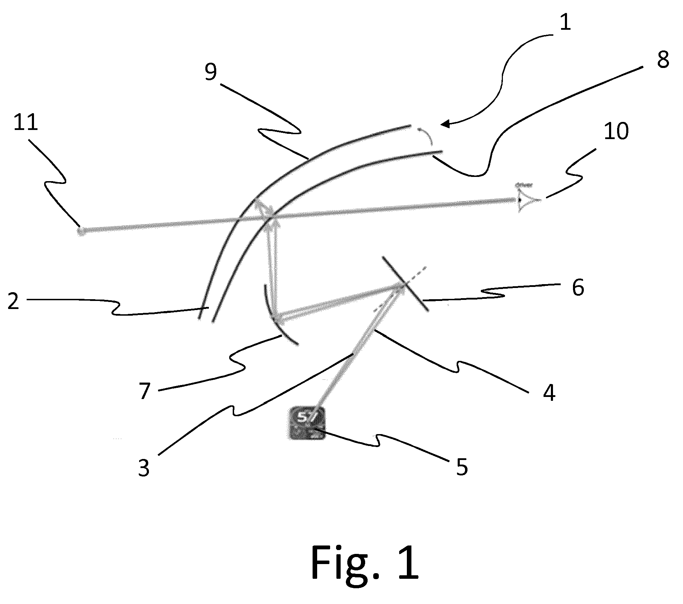

Referring to Fig. 1, the windshield 2 of a vehicle has a HUD with a wedge angle 1, or in other words a nonzero derivative of the windshield's thickness. In such a HUD, light rays 3 and 4 emitted from the same point in an image source 5 are reflected by a flat mirror 6 and an aspherical mirror 7 before being reflected at the inside surface 8 and the outside surface 9 of the windshield 2. Without an appropriate wedge angle, such reflections would lead to the generation of two separate images for the viewer's eye 10. Thanks to the presence of the wedge angle 1, the HUD allows to having an overlap of these two separate images to form a single virtual image 11.

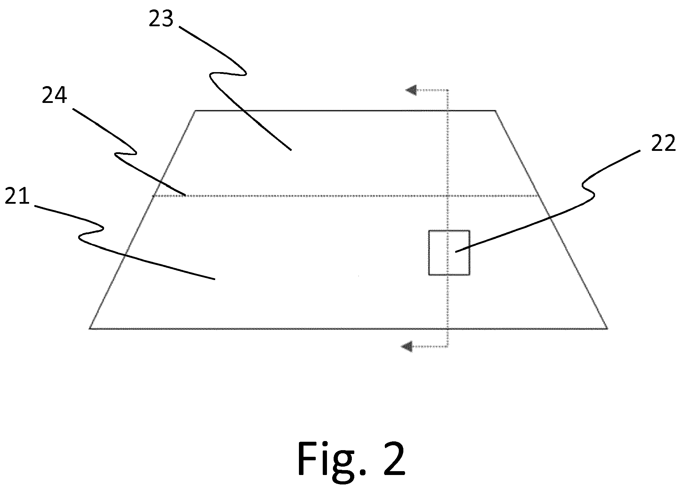

Fig. 2 shows an assembly of PVB sheet portions of the windshield 2. The wedge shaped PVB sheet portion 21 covers the lower part of the windshield area and the plane PVB sheet portion 23 covers the upper part of the windshield area, with the zone 22 corresponding to the HUD viewing field of the windshield. Such zone 22 is fully included in the area of the wedge shaped PVB sheet 21 because the wedge angle is needed in this zone for the compensation of the double images in reflection generated by the HUD projector. The line 24 corresponds to the junction between the wedge shaped PVB sheet portion 21 and the plane PVB sheet portion 23. Such junction can be performed here by hot air welding or ultrasonic welding. The assembly of PVB sheet portions has the dimensions of the windshield. The cutting to size of the PVB sheets is performed here before the welding step, separately on each PVB sheet portion. It can also be performed directly on the assembly of PVB sheet portions, after the welding. After the cutting and welding steps, the assembly of PVB sheet portions is here laminated between two glass sheets in order to form the windshield. Such lamination step can be performed with the help of glass vacuum bags, vacuum rings or nip rolls.

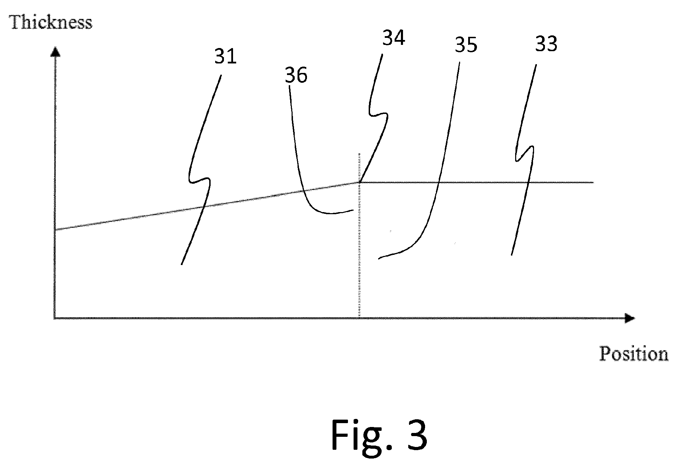

Fig. 3 represents the thickness profile of the assembly of the PVB sheet portions of Fig. 2, from the bottom to the top of windshield. The first part 31 corresponds to the wedge shaped PVB sheet portion 21. The second part 33 corresponds to the plane PVB sheet portion 23. The adjacent edges 35, 36 of the plane PVB sheet portion 23 and of the wedge shaped PVB sheet portions 21 have the same thickness 34. This allows an optimal junction between the plane and wedge shaped PVB sheet portion 31 and 33.

## Claims

1. Method for producing a HUD compatible windshield (2) comprising a HUD viewing field (22) provided by an area of a portion of a wedge shaped PVB sheet (21) with an appropriate wedge angle (1) for compensating the double images occurring in reflection at outside and inside surfaces (9,8) of the windshield (2), wherein the method comprises the following steps:
- providing said wedge shaped PVB sheet portion (21);
- providing a portion of a plane PVB sheet (23);
- assembling said two respective portions (21,23) of the wedge shaped and plane PVB sheets together; and
- forming the windshield (2),
**characterized in that**
the portion of the plane PVB sheet (23) is assembled to the portion of the wedge shaped PVB sheet (21) above the latter, in order to be in the upper part (33) of the windshield (2).

2. Method according to claim 1, wherein the assembly of the two wedge and plane PVB sheet portions (21,23) is laminated between two glass sheets(8,9).

3. Method according to one of claims 1 and 2, wherein adjacent edges (35,36) of the two plane and wedge PVB sheet portions (23,21) have the same thickness.

4. Method according to anyone of claims 1 to 3, wherein the assembly of the two said portions (21,23) is formed by ultrasonic welding.

5. Method according to anyone of claims 1 to 3, wherein the assembly of the two said portions (21,23) is formed by hot air welding.

6. Windshield **characterized in that** it is obtained by the method of anyone of claims 1 to 5.
